# EUROPEAN PATENT APPLICATION

(11) **EP 2 720 130 A2**
(43) Date of publication of application: **16.04.2014**
(21) Application number: 13004923.2
(22) Date of filing: 15.10.2013
(51) Int. Cl.: G06F 3/0488, G06F 3/16

(54) **Image display apparatus and method for operating the same**

(30) Priority: 15.10.2012 KR 20120114337
(71) Applicant: LG Electronics, Inc., Seoul, 150-721 (KR)
(72) Inventor: Choi, Tacksung, 137-724 Seoul (KR); Kwak, Kookyeon, 137-724 Seoul (KR)
(74) Representative: Katérle, Axel

(57) **Abstract**

An image display apparatus and a method for operating the same are disclosed. The image display apparatus operating method includes receiving a touch input in a first direction, outputting a first sound corresponding to the first direction, receiving a touch input in a second direction, and outputting a second sound corresponding to the second direction. Therefore, it may be possible to improve user convenience.

## Description

### CROSS-REFERENCE TO RELATED APPLICATION

This application claims the priority benefit of Korean Patent Application No. 10-2012-0114337, filed on October 15, 2012 in the Korean Intellectual Property Office, the disclosure of which is incorporated herein by reference.

### BACKGROUND OF THE INVENTION

### 1. Field of the invention

The present invention relates to an image display apparatus and a method for operating the same, and more particularly to an image display apparatus which may improve user convenience, and a method for operating the same.

### 2. Description of the Related Art

An image display apparatus processes and outputs an image signal. The image display apparatus also processes and outputs an audio signal. On the other hand, various efforts have been made to construct a user-friendly user interface through the image display apparatus.

### SUMMARY OF THE INVENTION

It is an object of the present invention to provide an image display apparatus which may improve user convenience, and a method for operating the same.

In accordance with an aspect of the present invention, the above and other objects can be accomplished by the provision of a method for operating an image display apparatus, the method including receiving a touch input in a first direction, outputting a first sound corresponding to the first direction, receiving a touch input in a second direction, and outputting a second sound corresponding to the second direction.

In accordance with another aspect of the present invention, there is provided an image display apparatus including a display, a touch sensor configured to sense a touch input, an audio processing unit configured to generate a first sound in response to a touch input in a first direction sensed by the touch sensor and to generate a second sound in response to a touch input in a second direction sensed by the touch sensor, and an audio output unit configured to output the first sound or the second sound.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic view of an image display apparatus according to one embodiment of the present invention;
FIG. 2 is a block diagram of the image display apparatus of FIG. 1;
FIG. 3 is a block diagram of an audio processing device according to an exemplary embodiment of the present invention;
FIG. 4 is a block diagram of an audio processing unit in FIG. 3;
FIG. 5 is a flowchart illustrating a method for operating the image display apparatus according to the one embodiment of the present invention;
FIGS. 6 to 14D are views referred to for description of various examples of the operating method of FIG. 5;
FIG. 15 is a schematic view of an image display apparatus according to another embodiment of the present invention;
FIG. 16 is a block diagram of the image display apparatus of FIG. 15;
FIG. 17 is a block diagram of a controller in FIG. 16;
FIG. 18 is a flowchart illustrating a method for operating the image display apparatus according to the another embodiment of the present invention; and
FIGS. 19A to 19D are views referred to for description of various examples of the operating method of FIG. 18.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

It is to be noted that the suffixes of constituent elements used in the following description, such as "module" and "unit", are simply used considering the ease of writing this specification and do not have any particular importance or role. Accordingly, the terms "module" and "unit" may be used interchangeably.

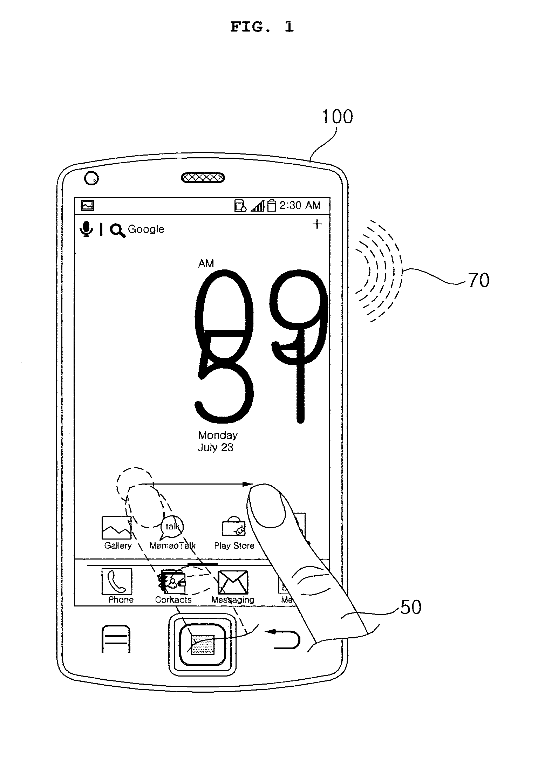

FIG. 1 is a schematic view of an image display apparatus according to one embodiment of the present invention.

Referring to FIG. 1, the image display apparatus according to the present embodiment, denoted by reference numeral 100, may be a mobile terminal through which a touch input can be performed. Here, the mobile terminal 100 may be a cellular phone, a smart phone, a notebook computer, a digital camera, a camcorder, a tablet personal computer (PC), or the like.

The following description of FIGS. 1 to 14D will be mainly given on the assumption that the image display apparatus 100 is a mobile terminal through which a touch input can be performed.

On the other hand, the image display apparatus 100 according to the present embodiment outputs a directional sound 70 based on a directional touch input (in other words, a drag input) by the user's finger 50. Therefore, the user may intuitively recognize directionality based on the touch input, resulting in an increase in user convenience.

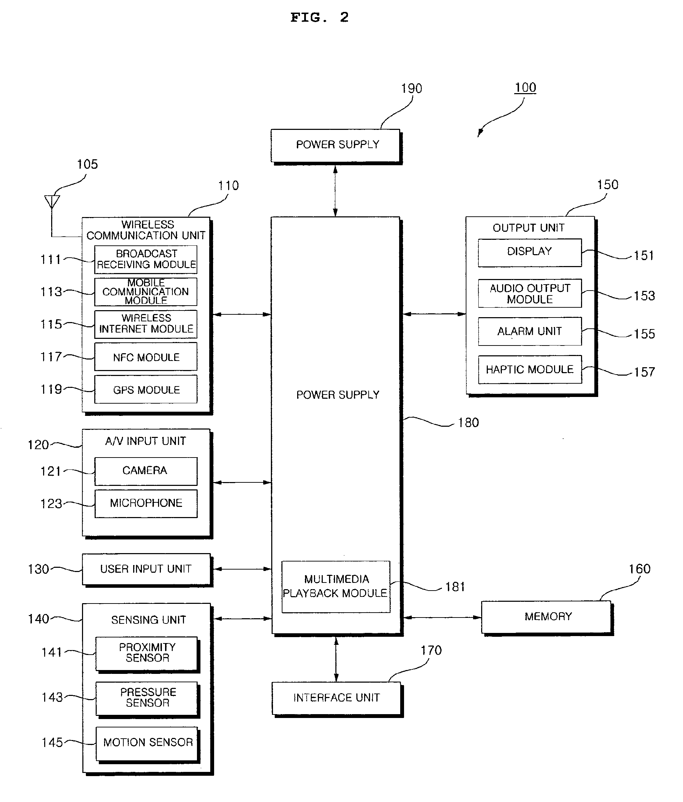

FIG. 2 is a block diagram of the image display apparatus of FIG. 1.

Referring to FIG. 2, the mobile terminal 100 may include a wireless communication unit 110, an audio/video (A/V) input unit 120, a user input unit 130, a sensing unit 140, an output unit 150, a memory 160, an interface unit 170, a controller 180, and a power supply 190.

The wireless communication unit 110 may include a broadcast receiving module 111, a mobile communication module 113, a wireless Internet module 115, a near field communication (NFC) module 117, and a global positioning system (GPS) module 119.

The broadcast receiving module 111 may receive at least one of a broadcast signal and broadcast-related information from an external broadcast management server over a broadcast channel. Here, the broadcast channel may include a satellite channel and a terrestrial channel.

The broadcast signal and/or broadcast-related information received through the broadcast receiving module 111 may be stored in the memory 160.

The mobile communication module 113 transmits/receives radio signals to/from at least one of a base station, an external terminal and a server over a mobile communication network. Here, the radio signals may include a voice call signal, a video telephony call signal or various forms of data associated with text/multimedia message transmission/reception.

The wireless Internet module 115 refers to a module for wireless Internet access. This module 115 may be installed inside or outside of the mobile terminal 100. For example, the wireless Internet module 115 may perform WiFi-based wireless communication or WiFi Direct-based wireless communication.

The NFC module 117 performs near field communication (NFC). When the mobile terminal 100 approaches an electronic device equipped with an NFC tag or NFC module within a predetermined distance, namely, when the mobile terminal 100 tags the electronic device, the NFC module 117 may receive data from the electronic device or transmit data to the electronic device.

Such local area communication technologies may include Bluetooth, Radio Frequency Identification (RFID), Infrared Data Association (IrDA), Ultra Wideband (UWB), and ZigBee.

The GPS module 119 may receive location information from a plurality of GPS satellites.

The A/V input unit 120 is provided to input an audio signal or video signal. The A/V input unit 120 may include a camera 121 and a microphone 123.

The user input unit 130 generates key input data that the user inputs to control the operation of the terminal. To this end, the user input unit 130 may include a key pad, a dome switch, and a touch pad (static pressure/capacitance). In particular, the touch pad and a display 151 to be described later may form a layered structure, which may be called a touch screen.

The sensing unit 140 may sense the current state of the mobile terminal 100, such as the open/closed state of the mobile terminal 100, the location of the mobile terminal 100 or the presence or absence of user contact with the mobile terminal 100, and generate a sense signal for control of the operation of the mobile terminal 100 as a result of the sensing.

The sensing unit 140 may include a proximity sensor 141, a pressure sensor 143, and a motion sensor 145. The motion sensor 145 may sense the motion or position of the mobile terminal 100 using an acceleration sensor, a gyro sensor and a gravity sensor. In particular, the gyro sensor is a sensor which measures an angular velocity, and may sense a direction (angle) in which the mobile terminal 100 is turned relative to a reference direction.

The output unit 150 may include the display 151, an audio output module 153, an alarm unit 155, and a haptic module 157.

The display 151 displays and outputs information processed in the mobile terminal 100.

On the other hand, in the case where the display 151 and the touch pad form a layered structure to constitute a touch screen, as stated above, the display 151 may be used as an input device through which information can be input by user touch, as well as an output device.

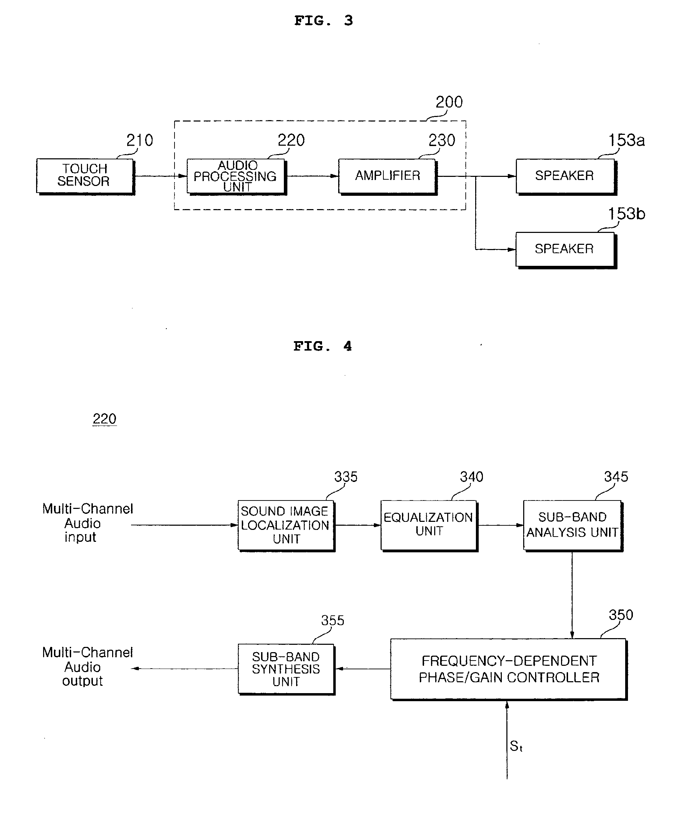

In this regard, the display 151 may include a separate touch sensor (210 in FIG. 3) in addition to a display module.

The audio output module 153 outputs audio data received from the wireless communication unit 110 or stored in the memory 160. This audio output module 153 may include a speaker and a buzzer. The mobile terminal 100 may have at least one speaker.

The alarm unit 155 outputs a signal to notify the user of occurrence of an event in the mobile terminal 100. For example, such a signal may be output in the form of a vibration.

The haptic module 157 generates a variety of haptic effects which can be felt by the user. A representative example of the haptic effects generated by the haptic module 157 may be a vibration effect.

The memory 160 may store programs for processing and control of the controller 180 and may also function to temporarily store input/output data (for example, a phonebook, messages, still images, and moving images).

The interface unit 170 acts to interface with all external devices connected to the mobile terminal 100. The interface unit 170 may receive data transmitted from such an external device or power supplied therefrom and transfer the received data or power to each internal component of the mobile terminal 100, or transmit internal data of the mobile terminal 100 to the external device.

The controller 180 typically controls the operation of each of the above-stated components of the mobile terminal 100, so as to control the overall operation of the mobile terminal 100. For example, the controller 180 may perform control and processing associated with a voice call, data communication, and a video call. In addition, the controller 180 may include a multimedia playback module 181 for multimedia playback. The multimedia playback module 181 may be configured by hardware in the controller 180 or by software separately from the controller 180.

On the other hand, in connection with the present embodiment, the controller 180 may receive a directional touch input from the touch sensor (210 in FIG. 3) and generate and output a directional sound based on the received directional touch input, as will be described later in detail with reference to FIG. 3 and the subsequent drawings.

The power supply 190, under the control of the controller 180, receives external power or internal power and supplies power necessary for the operation of each component of the mobile terminal 100.

On the other hand, the block diagram of the mobile terminal 100 shown in FIG. 2 is for one embodiment of the present invention. The respective components of the block diagram may be combined, added or omitted according to specifications of the mobile terminal 100 which is actually implemented. In other words, as needed, two or more of these components may be combined into one component or one thereof may be subdivided into two or more components. In addition, the function performed by each block is intended for description of the present embodiment, and the detailed operation or device thereof does not limit the scope of the present invention.

FIG. 3 is a block diagram of an audio processing device according to an exemplary embodiment of the present invention.

Referring to FIG. 3, the audio processing device, denoted by reference numeral 200, may include an audio processing unit 220 and an amplifier 230.

In FIG. 3, the touch sensor 210 senses a touch input of the user. For example, the touch sensor 210 may sense the user's touch input based on capacitive touch sensing or static pressure touch sensing.

The touch sensor 210 may be provided in the sensing unit 140 in FIG. 2 or the display 151 in FIG. 2. Alternatively, the touch sensor 210 may be formed integrally with the display 151.

The touch sensor 210 senses a touch input of the user's finger or the like and outputs a touch sense signal. Here, the touch sense signal may include at least one of touch position information, touch direction information, touch strength information and touch speed information.

The touch sense signal may be input to the audio processing unit 220.

The audio processing unit 220 performs audio signal processing based on the touch sense signal from the touch sensor 210.

In detail, the audio processing unit 220 may decode an input audio signal, perform channel separation with respect to the input audio signal, or control the coefficient or phase of the decoded or channel-separated audio signal on a frequency band basis. In addition, the audio processing unit 220 may adjust bass, treble, volume, etc.

In particular, in connection with the present embodiment, when there is a directional touch input, or drag input, the audio processing unit 220 generates and outputs a sound corresponding to a given direction.

On the other hand, in the case where one speaker is provided in the mobile terminal 100, the audio processing unit 220 may sequentially change at least one of the frequency and amplitude of an output audio signal to provide a directional output.

As an example, the audio processing unit 220 may sequentially increase or decrease the frequency of an output audio signal based on a directional touch input. As a result, the user may recognize that an output sound approaches or recedes, as in a Doppler effect. Owing to this effect, the user may recognize directionality.

As another example, the audio processing unit 220 may sequentially increase or decrease the amplitude of an output audio signal based on a directional touch input. As a result, the user may recognize that an output sound approaches or recedes. Owing to this effect, the user may recognize directionality.

Alternatively, the audio processing unit 220 may sequentially increase the amplitude of an output audio signal while sequentially increasing the frequency of the audio signal, or sequentially decrease the amplitude of an output audio signal while sequentially decreasing the frequency of the audio signal.

On the other hand, in the case where two speakers are provided in the mobile terminal 100, the audio processing unit 220 may sequentially change at least one of the frequency, amplitude and phase of each of output audio signals of two channels to provide a directional output.

For example, the audio processing unit 220 may increase at least one of the frequency, amplitude and phase of an audio signal of one of two channels or decrease at least one of the frequency, amplitude and phase of an audio signal of the other channel, based on a directional touch input, to output a directional sound. As a result, the user may recognize directionality.

On the other hand, the amplifier 230 amplifies an audio signal output from the audio processing unit 220. In particular, the amplifier 230 amplifies a directional audio signal.

The audio signal amplified by the amplifier 230 is input to speakers 153a and 153b, each of which outputs a sound corresponding to the input audio signal.

On the other hand, although the mobile terminal 100 is illustrated in the drawing as having the two speakers 153a and 153b, it may have only one speaker, alternatively.

FIG. 4 is a block diagram of the audio processing unit in FIG. 3.

Referring to FIG. 4, the audio processing unit 220 may include a sound image localization unit 335, an equalization unit 340, a sub-band analysis unit 345, a frequency-dependent phase/gain controller 350, and a sub-band synthesis unit 355.

The sound image localization unit 335 controls sound image localization based on an input audio signal.

Here, the input audio signal may be an externally input audio signal or an audio signal pre-stored in the memory 160.

The sound image localization signifies localization of a sound image perceived sensibly. For example, for a stereo audio signal having a left channel and a right channel, a sound image may be localized at a center between a left speaker and a right speaker when an audio signal of the left channel and an audio signal of the right channel are the same.

Localizing a sound image may enable a listener to feel a sound source at a specific location (specific direction) in a sound field space, for example, based on a phase difference (time difference) and a level ratio (sound pressure level ratio) of an audio signal which reaches the listener's ears.

For control of this sound image localization, head-related transfer function (HRTF) filtering may be used with respect to the input audio signal.

HRTF signifies a transfer function between a sound wave which originates from a sound source at a certain location and a sound wave which reaches an eardrum. This HRTF may be acquired by inserting a microphone into an ear of a real listener or an ear of a human-shaped model and then measuring an impulse response of an audio signal at a specific angle.

The HRTF has a value varying with the azimuth and altitude of a sound source. In addition, the value of the HRTF may vary according to physical characteristics of a listener, such as a head shape, a head size or an ear shape.

The equalization unit 340 equalizes the sound image localization-controlled audio signal based on information about a distance with a speaker or information about an arrangement of the speaker. For example, the equalization unit 340 may apply an equalizer corresponding to the distance between the speaker and a listener or the arrangement of the speaker to the sound image localization-controlled audio signal. To this end, the equalization unit 340 may separately receive detailed information about the distance between the listener and the speaker or speaker arrangement information. In addition, the equalization unit 340 may output the above information together after the equalization.

Although this equalization is illustrated as being performed in a frequency domain of the audio signal, the present invention is not limited thereto. For example, the equalization may be performed in a time domain of the audio signal.

The sub-band analysis unit 345 performs sub-band analysis filtering with respect to an audio signal from the equalization unit 340. That is, the sub-band analysis unit 345 converts the sound image localization-controlled audio signal equalized by the equalization unit 340 into a frequency signal. To this end, the sub-band analysis unit 345 includes a sub-band analysis filter bank. The number of sub-bands of the audio signal filtered by the sub-band analysis unit 345 may be 32 or 64. Alternatively, the sub-bands of the filtered audio signal may be FFT sub-bands.

The audio signal of each frequency band may be phase-controlled or gain-controlled on a frequency band basis or on a frequency band group basis by the frequency-dependent phase/gain controller 350 to be described below.

The frequency-dependent phase/gain controller 350 controls at least one of the phase and gain of the audio signal on a frequency band basis.

To this end, the frequency-dependent phase/gain controller 350 may perform a control operation for depth-optimized factor calculation and reproduction by calculating a complex value factor corresponding to a given depth and applying the calculated complex value factor to a sub-band analysis signal.

That is, the frequency-dependent phase/gain controller 350 may independently perform inter-channel symbol changes respectively at all frequency bands, may divide a specific frequency range into a plurality of frequency bands and perform inter-channel symbol changes respectively at the divided frequency bands, may divide a specific frequency range into a plurality of frequency band groups and perform inter-channel symbol changes respectively at the divided frequency band groups, may independently perform inter-channel complex value adjustments respectively at all frequency bands, may divide a specific frequency range into a plurality of frequency bands and perform inter-channel complex value adjustments respectively at the divided frequency bands, or may divide a specific frequency range into a plurality of frequency band groups and perform inter-channel complex value adjustments respectively at the divided frequency band groups. Therefore, the frequency-dependent phase/gain controller 350 may perform a control operation for depth-optimized factor calculation and reproduction by calculating a complex value factor corresponding to a given depth and applying the calculated complex value factor to a sub-band analysis signal.

In detail, the frequency-dependent phase/gain controller 350 may control the phase of the audio signal on a frequency band basis.

The phase control may be performed in various ways. For example, the frequency-dependent phase/gain controller 350 may divide a specific frequency range into a plurality of frequency bands and perform inter-channel symbol changes respectively at the divided frequency bands, may divide a specific frequency range into a plurality of frequency band groups and perform inter-channel symbol changes respectively at the divided frequency band groups, may independently perform inter-channel phase adjustments respectively at all frequency bands, may divide a specific frequency range into a plurality of frequency bands and perform inter-channel phase adjustments respectively at the divided frequency bands, or may divide a specific frequency range into a plurality of frequency band groups and perform inter-channel phase adjustments respectively at the divided frequency band groups.

Also, in detail, the frequency-dependent phase/gain controller 350 may control the gain of the audio signal on a frequency band basis.

The gain control may be performed in various ways. For example, the frequency-dependent phase/gain controller 350 may independently perform gain adjustments respectively at all frequency bands, may divide a specific frequency range into a plurality of frequency bands and perform gain adjustments respectively at the divided frequency bands, or may divide a specific frequency range into a plurality of frequency band groups and perform gain adjustments respectively at the divided frequency band groups.

Particularly, in connection with the present embodiment, the frequency-dependent phase/gain controller 350 may receive a directional touch input signal St and perform signal processing based on the received directional touch input signal St such that an audio signal of a directional sound is output.

In detail, the frequency-dependent phase/gain controller 350 may control at least one of the phase and gain of an output audio signal on a frequency band basis.

In the case where one speaker is provided in the mobile terminal 100, the frequency-dependent phase/gain controller 350 may sequentially change at least one of the frequency and amplitude of an audio signal to provide a directional output.

As an example, the frequency-dependent phase/gain controller 350 may sequentially increase or decrease the frequency of an audio signal based on the directional touch input signal St. As a result, the user may recognize that an output sound approaches or recedes, as in a Doppler effect. Owing to this effect, the user may recognize directionality.

As another example, the frequency-dependent phase/gain controller 350 may sequentially increase or decrease the amplitude of an audio signal based on the directional touch input signal St. As a result, the user may recognize that an output sound approaches or recedes. Owing to this effect, the user may recognize directionality.

Alternatively, the frequency-dependent phase/gain controller 350 may sequentially increase the amplitude of an audio signal while sequentially increasing the frequency of the audio signal, or sequentially decrease the amplitude of an audio signal while sequentially decreasing the frequency of the audio signal.

On the other hand, in the case where two speakers are provided in the mobile terminal 100, the frequency-dependent phase/gain controller 350 may sequentially change at least one of the frequency, amplitude and phase of each of output audio signals of two channels to provide a directional output.

For example, the frequency-dependent phase/gain controller 350 may increase at least one of the frequency, amplitude and phase of an audio signal of one of two channels or decrease at least one of the frequency, amplitude and phase of an audio signal of the other channel, based on the directional touch input signal St, to output a directional sound. As a result, the user may recognize directionality.

The sub-band synthesis unit 355 performs sub-band synthesis filtering with respect to the audio signal controlled in phase or gain on a frequency band basis.

The sub-band synthesis unit 355 performs the sub-band synthesis filtering with respect to the phase-controlled or gain-controlled audio signal. That is, the sub-band synthesis unit 355 synthesizes 32 sub-bands or 64 sub-bands of the audio signal. To this end, the sub-band synthesis unit 355 includes a sub-band synthesis filter bank. Therefore, a multi-channel audio signal, subjected to sound image localization, phase control, gain control, etc. according to a given depth, is finally output.

On the other hand, the operation of the sound image localization unit 335 may be performed only in the case where the mobile terminal 100 has two speakers. That is, in the case where the mobile terminal 100 has one speaker, the operation of the sound image localization unit 335 may be omitted and the operation of the equalization unit 340 may be directly performed.

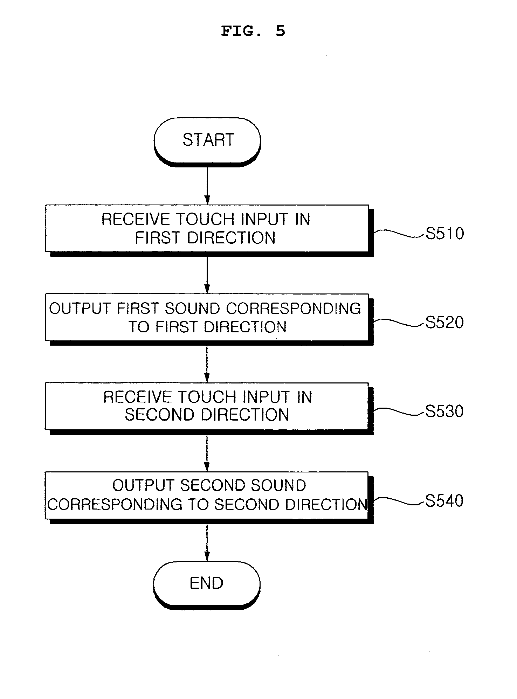

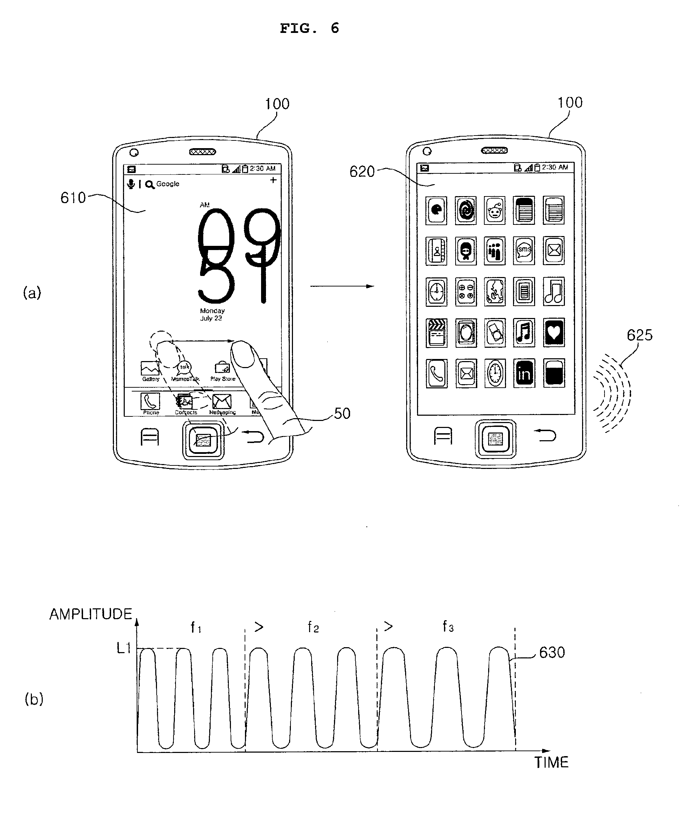

FIG. 5 is a flowchart illustrating a method for operating the image display apparatus according to the one embodiment of the present invention, and FIGS. 6 to 14D are views referred to for description of various examples of the operating method of FIG. 5.

First, referring to FIG. 5, the image display apparatus 100 according to the present embodiment receives a touch input in a first direction (S510). Then, the image display apparatus 100 outputs a first sound corresponding to the first direction (S520).

Referring to FIG. 6(a), the image display apparatus 100 may display a home screen 610. When there is a right-directional touch input by the user's finger 50 in this state, the image display apparatus 100 may perform a screen change to display an application screen 620 including application items installed in the image display apparatus 100.

For example, in the case where the image display apparatus 100 has one speaker, it may output a right-directional sound 625 corresponding to the right-directional touch input through the one speaker.

In detail, when the touch sensor 210 of the image display apparatus 100 senses the right-directional touch input, it transfers a right-directional touch input signal to the audio processing unit 220.

The audio processing unit 220 may generate and output the right-directional sound corresponding to the right-directional touch input.

For example, the audio processing unit 220 may sequentially decrease the frequency of an output audio signal based on the right-directional touch input. That is, such an effect as an output sound from the image display apparatus 100 recedes as in a Doppler effect occurs. As a result, the user may intuitively recognize a left to right touch input.

FIG. 6(b) illustrates an audio signal 630 corresponding to the right-directional touch input. As can be seen from this drawing, the audio signal 630 is repeated three times at a first frequency f1, then three times at a second frequency f2 lower than the first frequency f1, and then three times at a third frequency f3 lower than the second frequency f2. Although the audio signal 630 has been illustrated as having a fixed amplitude L1, it may have a variable amplitude or amplitudes different according to the respective frequencies.

On the other hand, the image display apparatus 100 may vibrate through the haptic module 157 in response to the right-directional touch input.

On the other hand, the image display apparatus 100 receives a touch input in a second direction (S530). Then, the image display apparatus 100 outputs a second sound corresponding to the second direction (S540).

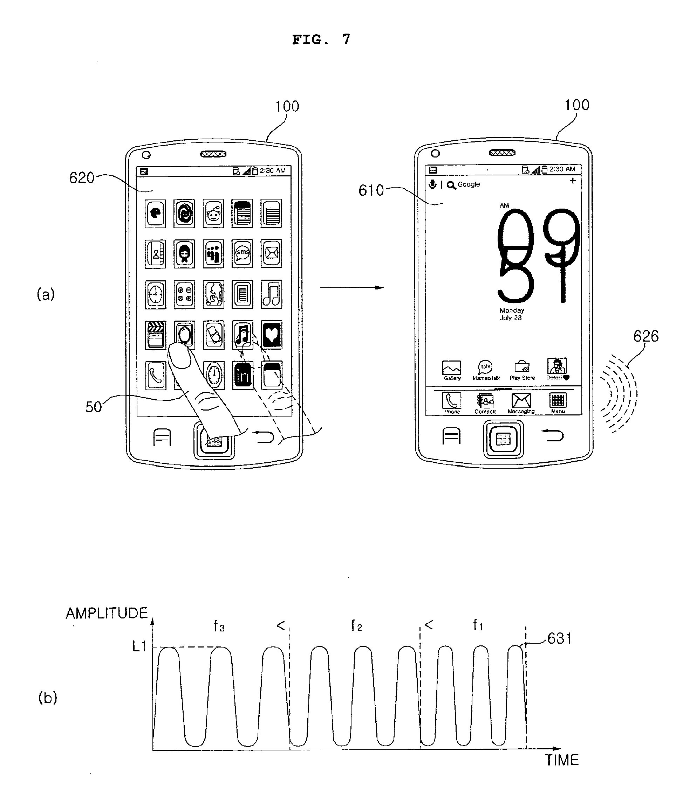

Referring to FIG. 7(a), the image display apparatus 100 may display the application screen 620. When there is a left-directional touch input by the user's finger 50 in this state, the image display apparatus 100 may perform a screen change to display the home screen 610.

For example, in the case where the image display apparatus 100 has one speaker, it may output a left-directional sound 626 corresponding to the left-directional touch input through the one speaker.

In detail, when the touch sensor 210 of the image display apparatus 100 senses the left-directional touch input, it transfers a left-directional touch input signal to the audio processing unit 220.

The audio processing unit 220 may generate and output the left-directional sound corresponding to the left-directional touch input.

For example, the audio processing unit 220 may sequentially increase the frequency of an output audio signal based on the left-directional touch input. That is, such an effect as an output sound from the image display apparatus 100 approaches as in a Doppler effect occurs. As a result, the user may intuitively recognize a right to left touch input.

FIG. 7(b) illustrates an audio signal 631 corresponding to the left-directional touch input. As can be seen from this drawing, the audio signal 631 is repeated three times at the third frequency f3, then three times at the second frequency f2 higher than the third frequency f3, and then three times at the first frequency f1 higher than the second frequency f2. Although the audio signal 631 has been illustrated as having the fixed amplitude L1, it may have a variable amplitude or amplitudes different according to the respective frequencies.

On the other hand, the image display apparatus 100 may vibrate through the haptic module 157 in response to the left-directional touch input. This vibration may be different from the vibration corresponding to the right-directional touch input. For example, the frequency of this vibration may be sequentially increased in a similar manner to the frequency of the audio signal.

On the other hand, it can be seen from comparison between FIG. 6 and FIG. 7 that the audio signals 630 and 631, generated and output respectively in response to the right-directional touch input and the left-directional touch input, have similar waveforms, but differ in that the frequency of the audio signal 630 is decreased with time and the frequency of the audio signal 631 is increased with time. Therefore, the user may intuitively recognize whether the current touch input is the left-directional touch input or the right-directional touch input.

Besides the cases of FIGS. 6 and 7, different sounds may be output in response to a downward touch input and an upward touch input.

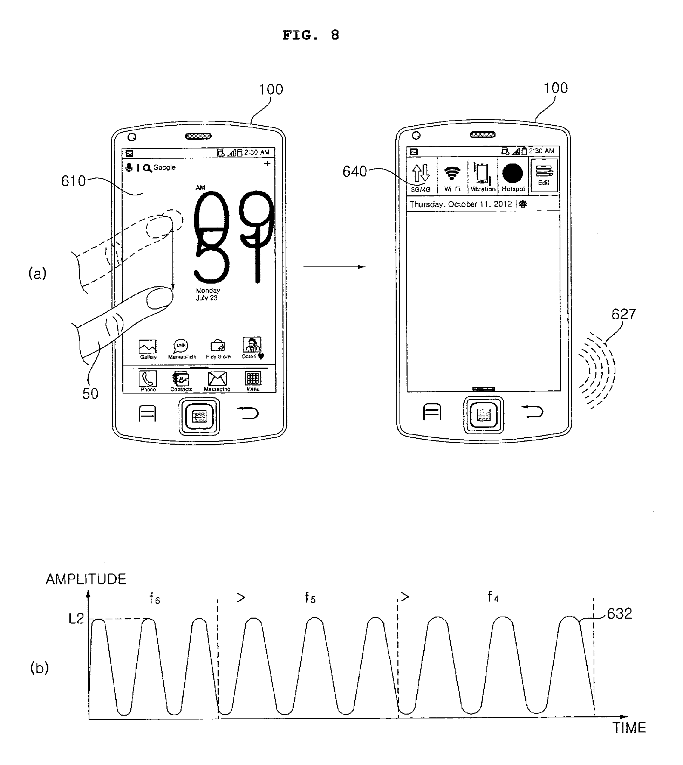

FIG. 8(a) illustrates that a quick setup screen 640 is displayed on the home screen 610 in response to the downward touch input. In the case where the image display apparatus 100 has one speaker, it may output a downward sound 627 corresponding to the downward touch input through the one speaker.

On the other hand, the quick setup screen 640 may be called a curtain screen in that it is displayed as if a curtain is drawn down. Alternatively, the quick setup screen 640 may be called a notification screen in that it may further include a notification message in addition to quick setup items such as a WiFi item and a vibration/sound item.

FIG. 8(b) illustrates an audio signal 632 corresponding to the downward touch input. As can be seen from this drawing, the audio signal 632 is repeated three times at a sixth frequency f6, then three times at a fifth frequency f5 lower than the sixth frequency f6, and then three times at a fourth frequency f4 lower than the fifth frequency f5. Although the audio signal 632 has been illustrated as having a fixed amplitude L2, it may have a variable amplitude or amplitudes different according to the respective frequencies.

On the other hand, it can be seen from comparison of FIG. 8(b) with FIG. 6(b) that the audio signal 632 of FIG. 8(b) is different in amplitude and frequency from the audio signal 630 of FIG. 6(b). In this regard, the sound corresponding to the downward touch input may be distinguished from the sound corresponding to the right-directional touch input. The sound corresponding to the downward touch input may also be distinguished from the sound corresponding to the left-directional touch input.

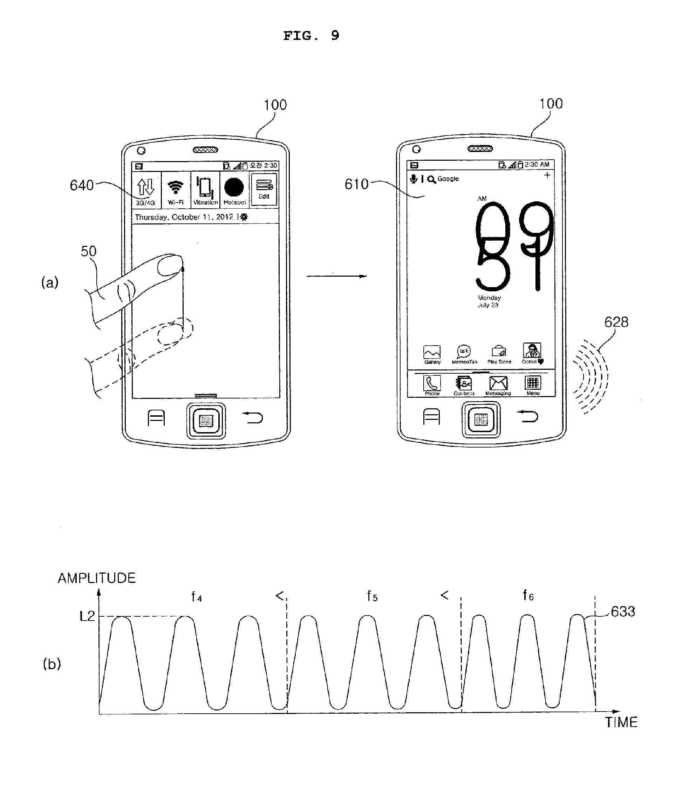

FIG. 9(a) illustrates that the home screen 610 is displayed on the quick setup screen 640 in response to the upward touch input. In the case where the image display apparatus 100 has one speaker, it may output an upward sound 628 corresponding to the upward touch input through the one speaker.

FIG. 9(b) illustrates an audio signal 633 corresponding to the upward touch input. As can be seen from this drawing, the audio signal 633 is repeated three times at the fourth frequency f4, then three times at the fifth frequency f5 higher than the fourth frequency f4, and then three times at the sixth frequency f6 higher than the fifth frequency f5. Although the audio signal 633 has been illustrated as having the fixed amplitude L2, it may have a variable amplitude or amplitudes different according to the respective frequencies.

On the other hand, it can be seen from comparison of FIG. 9(b) with FIG. 7(b) that the audio signal 633 of FIG. 9(b) is different in amplitude and frequency from the audio signal 631 of FIG. 7(b). In this regard, the sound corresponding to the upward touch input may be distinguished from the sound corresponding to the left-directional touch input. The sound corresponding to the upward touch input may also be distinguished from the sound corresponding to the right-directional touch input and the sound corresponding to the downward touch input.

As another example, a water drop sound may be output in response to the right-directional touch input, a rain sound may be output in response to the left-directional touch input, a bird sound may be output in response to the upward touch input, and a whistle sound may be output in response to the downward touch input. That is, sounds of different sources may be output according to the respective directions.

In this manner, according to the present embodiment, directional sounds are output in response to touch inputs in four directions, respectively.

Various examples are possible in addition to the examples illustrated in FIGS. 6 to 9. As an example, at least one of the frequency and amplitude of an audio signal may be changed according to each direction.

As another example, at least one of the output time, amplitude and frequency of an output sound may be changed according to the strength or speed of a touch input.

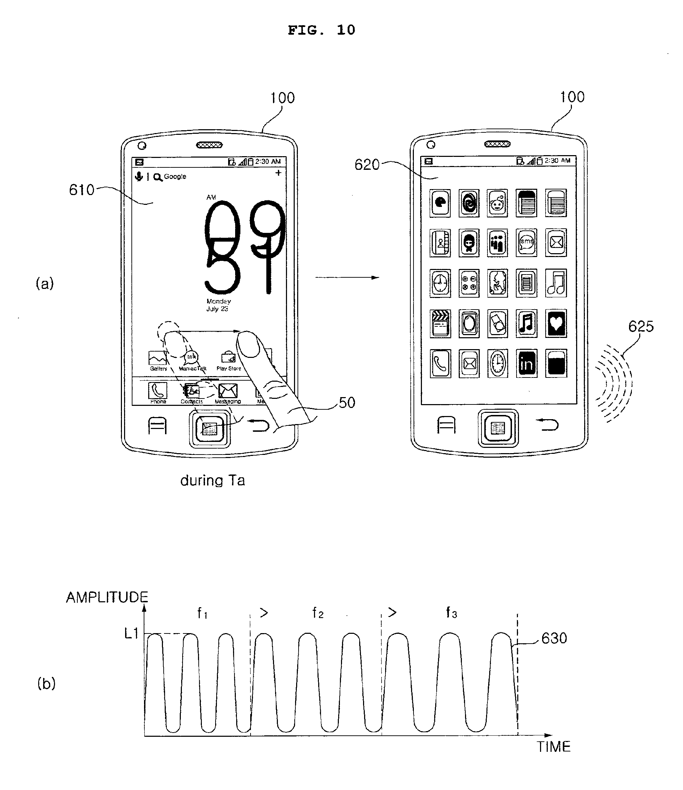

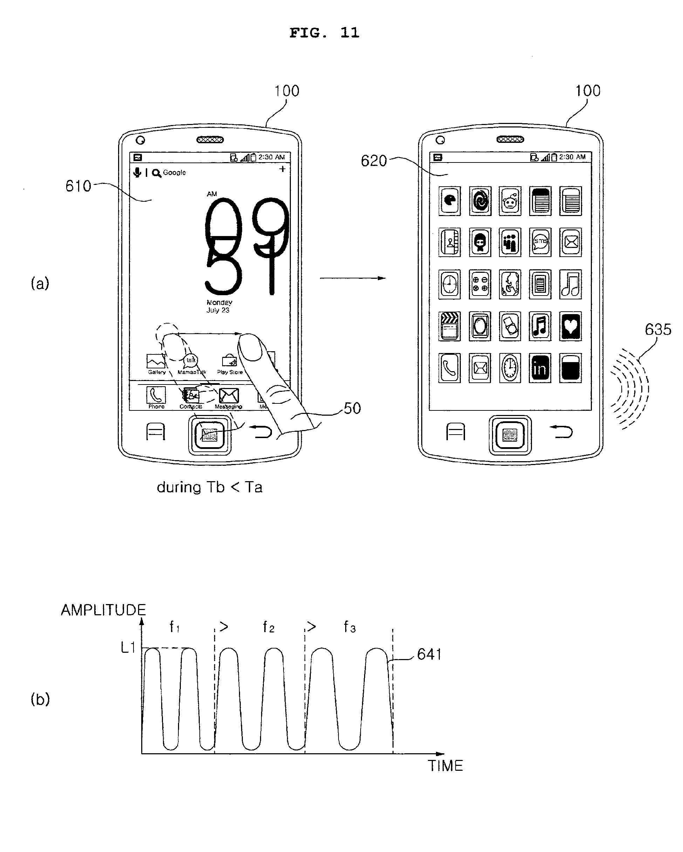

FIGS. 10 and 11 illustrate that the output time of an output sound is changed according to a right-directional touch input time, or right-directional touch input speed.

FIG. 10(a) illustrates that the right-directional sound 625 is output in response to the presence of a right-directional touch input during a period Ta. As can be seen from FIG. 10(b), the audio signal 630 corresponding to the right-directional sound 625 is sequentially decreased in frequency in such a manner that the audio signal 630 is repeated three times at the first frequency f1, then three times at the second frequency f2, and then three times at the third frequency f3.

FIG. 11(a) illustrates that a right-directional sound 635 is output in response to the presence of a right-directional touch input during a period Tb shorter than the period Ta. As can be seen from FIG. 11(b), an audio signal 641 corresponding to the right-directional sound 635 is sequentially decreased in frequency in such a manner that the audio signal 641 is repeated two times at the first frequency f1, then two times at the second frequency f2, and then two times at the third frequency f3.

It can be seen from comparison of FIG. 11(b) with FIG. 10(b) that the audio signal 641 of FIG. 11(b) is the same in amplitude L1, frequency and frequency variation as the audio signal 630 of FIG. 10(b), but is different from the audio signal 630 in that the audio signal 641 is shortened in output time. Therefore, the user may intuitively recognize the touch input speed and direction.

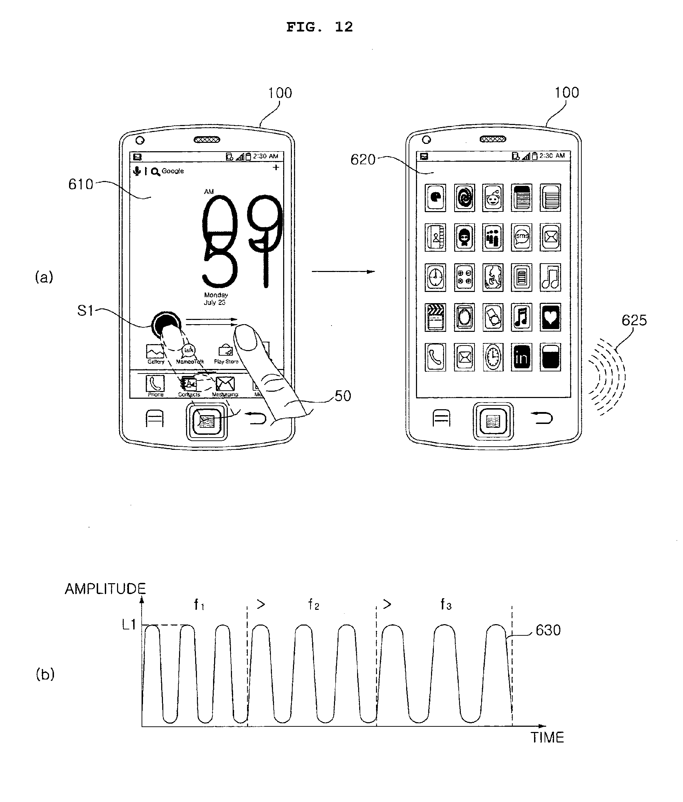

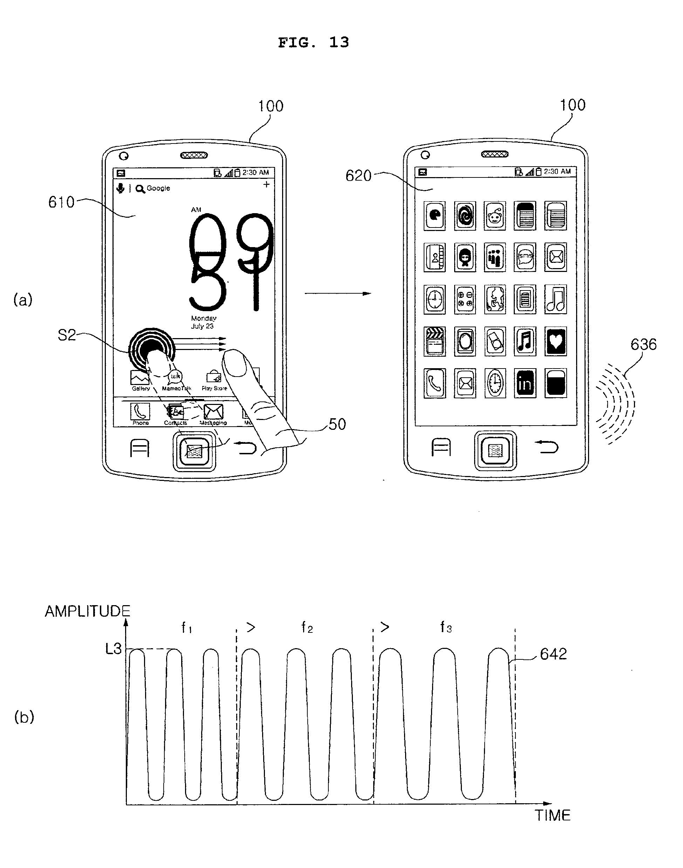

FIGS. 12 and 13 illustrate that the volume of an output sound, namely, the amplitude of an audio signal is changed according to the strength of a right-directional touch input.

FIG. 12(a) illustrates that the right-directional sound 625 is output in response to a right-directional touch input of a first strength S1. As can be seen from FIG. 12(b), the audio signal 630 corresponding to the right-directional sound 625 has the first amplitude L1 and is sequentially decreased in frequency in such a manner that the audio signal 630 is repeated three times at the first frequency f1, then three times at the second frequency f2, and then three times at the third frequency f3.

FIG. 13(a) illustrates that a right-directional sound 636 is output in response to a right-directional touch input of a second strength S2 greater than the first strength S1. As can be seen from FIG. 13(b), an audio signal 642 corresponding to the right-directional sound 636 has a third amplitude L3 and is sequentially decreased in frequency in such a manner that the audio signal 642 is repeated three times at the first frequency f1, then three times at the second frequency f2, and then three times at the third frequency f3.

It can be seen from comparison of FIG. 13(b) with FIG. 12(b) that the audio signal 642 of FIG. 13(b) is the same in frequency and frequency variation as the audio signal 630 of FIG. 12(b), but is different from the audio signal 630 in that the amplitude L3 of the audio signal 642 is different from the amplitude L1 of the audio signal 630. Therefore, the user may intuitively recognize the touch input strength and direction.

On the other hand, in the case where the image display apparatus 100 has two speakers, it may be possible to control the phase of an audio signal in addition to controlling the frequency and amplitude of the audio signal as stated above.

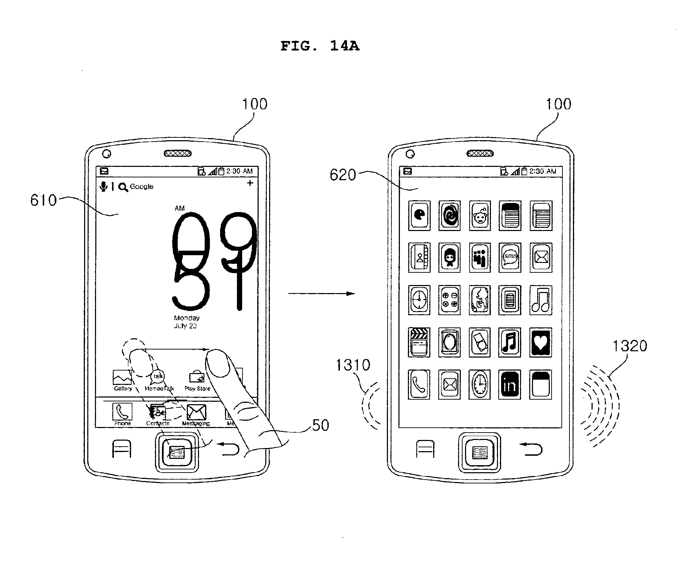

FIG. 14A illustrates that, based on a right-directional touch input, a first sound 1310 is output through the first speaker 153a, which is a left speaker, and a second sound 1320 is output through the second speaker 153b, which is a right speaker, while a screen change is made from the home screen 610 to the application screen 620 to display the application screen 620.

As can be seen from FIG. 14A, the component of the second sound 1320 is more emphasized. For example, an audio signal of the second sound 1320 may be higher in frequency, greater in amplitude and/or earlier in phase than an audio signal of the first sound 1310.

To this end, the frequency-dependent phase/gain controller 350 of the audio processing unit 220 may control the phase/gain of each audio signal on a frequency band basis based on the received touch input signal St.

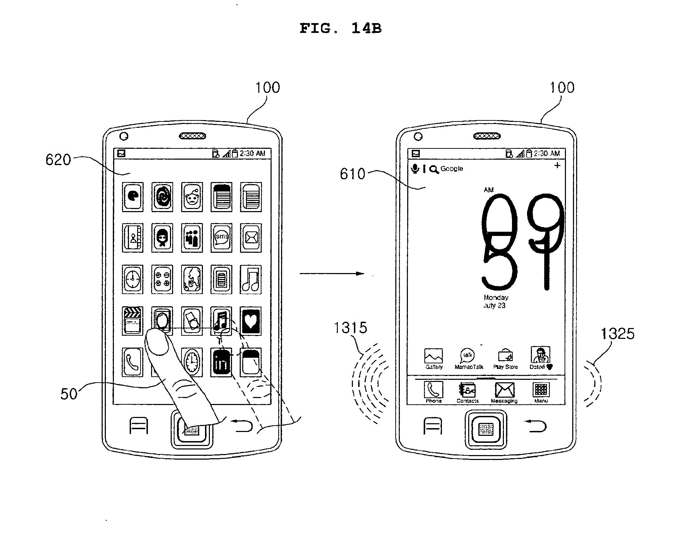

FIG. 14B illustrates that, based on a left-directional touch input, a first sound 1315 is output through the first speaker 153a which is the left speaker and a second sound 1325 is output through the second speaker 153b which is the right speaker, while a screen change is made from the application screen 620 to the home screen 610 to display the home screen 610.

As can be seen from FIG. 14B, the component of the first sound 1315 is more emphasized. For example, an audio signal of the first sound 1315 may be higher in frequency, greater in amplitude and/or earlier in phase than an audio signal of the second sound 1325.

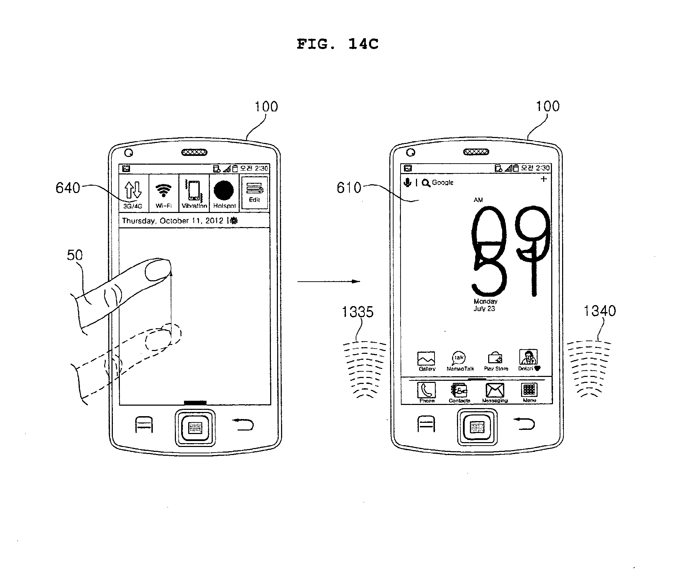

FIG. 14C illustrates that, based on a downward touch input, a first sound 1330 is output through the first speaker 153a which is the left speaker and a second sound 1345 is output through the second speaker 153b which is the right speaker, while a screen change is made from the home screen 610 to the quick setup screen 640 to display the quick setup screen 640.

As can be seen from FIG. 14C, the downward components of both the first sound 1330 and second sound 1345 are emphasized. For example, audio signals of the first sound 1330 and second sound 1345 may be sequentially decreased in frequency and/or amplitude.

To this end, the frequency-dependent phase/gain controller 350 of the audio processing unit 220 may control the phase/gain of each audio signal on a frequency band basis based on the received touch input signal St.

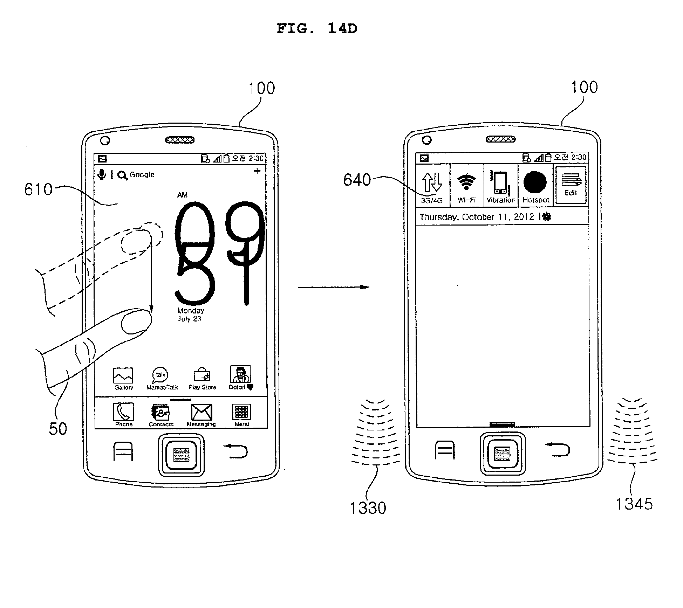

FIG. 14D illustrates that, based on an upward touch input, a first sound 1335 is output through the first speaker 153a which is the left speaker and a second sound 1340 is output through the second speaker 153b which is the right speaker, while a screen change is made from the quick setup screen 640 to the home screen 610 to display the home screen 610.

As can be seen from FIG. 14D, the upward components of both the first sound 1335 and second sound 1340 are emphasized. For example, audio signals of the first sound 1335 and second sound 1340 may be sequentially increased in frequency and/or amplitude.

On the other hand, although FIGS. 6 to 14D have illustrated that the home screen 610 is changed to the application screen 620 or quick setup screen 640 in response to a touch input, various modifications are possible.

As an example, when there is a right-directional touch input under the condition that a lock screen is displayed, the home screen 610 may be displayed and the audio signal 630 as shown in FIG. 6(b) may be output in response to the right-directional touch input.

As another example, when there is a right-directional touch input under the condition that a file list screen or Web page screen is displayed on the image display apparatus 100, the audio signal 630 as shown in FIG. 6(b) may be output while a screen change is made due to screen scrolling.

On the other hand, even if there are touch inputs in the same direction, output audio signals may be different according to attributes of screens displayed or attributes of screens to be displayed upon screen change. In detail, the output audio signals may be different in at least one of frequency, amplitude and phase. As a result, the user may readily recognize screen attributes.

That is, different audio signals may be output when there is a right-directional touch input under the condition that a lock screen is displayed and when there is a right-directional touch input under the condition that a file list screen is displayed.

On the other hand, when there is a right-directional touch input under the condition that a first file list screen or first Web page screen is displayed and when there is a right-directional touch input under the condition that a last file list screen or last Web page screen is displayed, output audio signals may differ in at least one of frequency, amplitude and phase. As a result, the user may intuitively recognize whether the current screen is the first screen or the last screen.

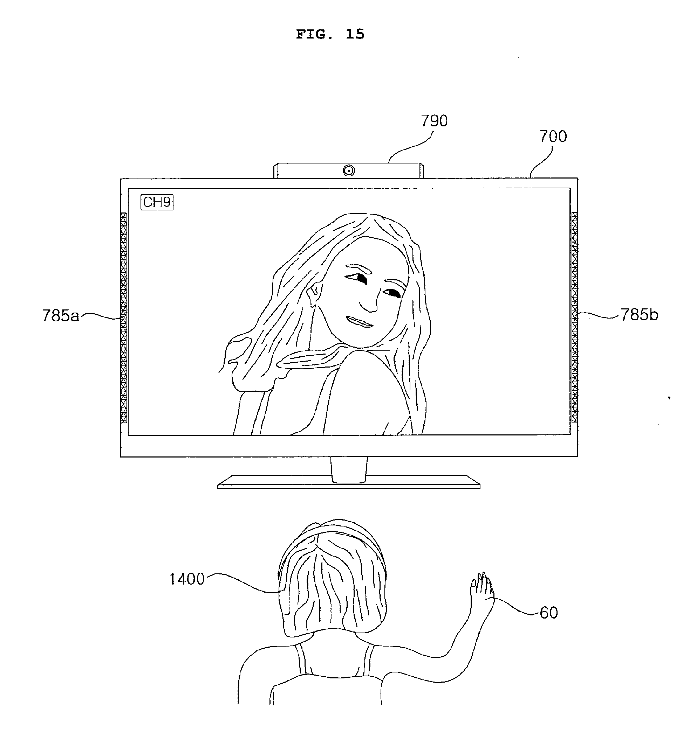

FIG. 15 is a schematic view of an image display apparatus according to another embodiment of the present invention.

Referring to FIG. 15, the image display apparatus according to the present embodiment, denoted by reference numeral 700, may be an image display apparatus through which a gesture input can be performed. Here, the image display apparatus 700 may be a television (TV), a monitor, a notebook computer, or the like.

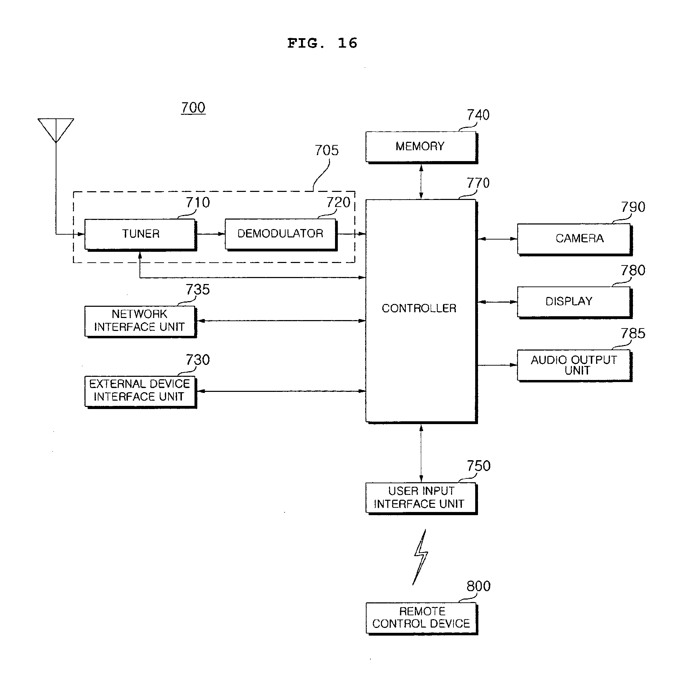

The following description of FIGS. 16 to 19D will be mainly given on the assumption that the image display apparatus 700 is a TV through which a gesture input can be performed.

On the other hand, the image display apparatus 700 according to the present embodiment outputs a directional sound through two speakers 785a and 785b based on a directional gesture input by a motion of a hand 60 of the user 1400. Therefore, the user may intuitively recognize directionality based on the gesture input, resulting in an increase in user convenience.

On the other hand, in order to sense the gesture input, the image display apparatus 700 may include a camera 790.

FIG. 16 a block diagram of the image display apparatus of FIG. 15.

Referring to FIG. 16, the image display apparatus 700 according to the present embodiment may include a broadcast receiving unit 705, an external device interface unit 730, a memory 740, a user input interface unit 750, a sensing unit (not shown), a controller 770, a display 780, an audio output unit 785, and the camera 790.

The broadcast receiving unit 705 may include a tuner 710, a demodulator 720, and a network interface unit 735. Of course, as needed, the broadcast receiving unit 705 may be designed in such a manner that it includes the tuner 710 and the demodulator 720 and does not include the network interface unit 735, or, conversely, in such a manner that it includes the network interface unit 735 and does not include the tuner 710 and the demodulator 720.

The tuner 710 selects a radio frequency (RF) broadcast signal corresponding to a channel selected by the user or RF broadcast signals corresponding to all pre-stored channels from among RF broadcast signals received through an antenna. The tuner 710 converts a selected RF broadcast signal into an intermediate frequency (IF) signal or a baseband video or audio signal.

The demodulator 720 receives and demodulates a digital IF (DIF) signal converted by the tuner 710.

A stream signal output from the demodulator 720 may be input to the controller 770. The controller 770 performs demultiplexing, video/audio signal processing, etc. to output an image through the display 780 and output a sound through the audio output unit 785.

The external device interface unit 730 may transmit/receive data to/from an external device connected to the image display apparatus 700.

The network interface unit 735 provides an interface for connection of the image display apparatus 700 with a wired/wireless network including Internet.

The memory 740 may store a program for each signal processing and control of the controller 770 or a video, audio or data signal subjected to signal processing.

On the other hand, in connection with the present embodiment, the memory 740 may store an audio signal corresponding to a directional gesture input.

Although the memory 740 has been shown in FIG. 16 as being provided separately from the controller 770, the scope of the present invention is not limited thereto. For example, the memory 740 may be provided in the controller 770.

The user input interface unit 750 transfers a signal input by the user to the controller 770 or transfers a signal from the controller 770 to the user.

The controller 770 may demultiplex a stream input through the tuner 710, demodulator 720 or external device interface unit 730, or process demultiplexed signals to generate and output signals for output of an image or sound.

A video signal processed by the controller 770 may be input to the display 780 so as to be displayed as a corresponding image. The video signal processed by the controller 770 may also be input to an external output device through the external device interface unit 730.

An audio signal processed by the controller 770 may be output as a sound through the audio output unit 785. The audio signal processed by the controller 770 may also be input to an external output device through the external device interface unit 730.

On the other hand, in connection with the present embodiment, the controller 770 may generate and output a directional sound corresponding to a directional gesture input upon receiving the directional gesture input.

For example, the controller 770 may recognize the user's gesture based on a captured image input through the camera 790. When there is a directional gesture among the user's gestures, the controller 770 may generate and output a directional sound based on the directional gesture. In addition, the controller 770 may generate and output sounds having different frequencies, amplitudes or phases according to gesture directions.

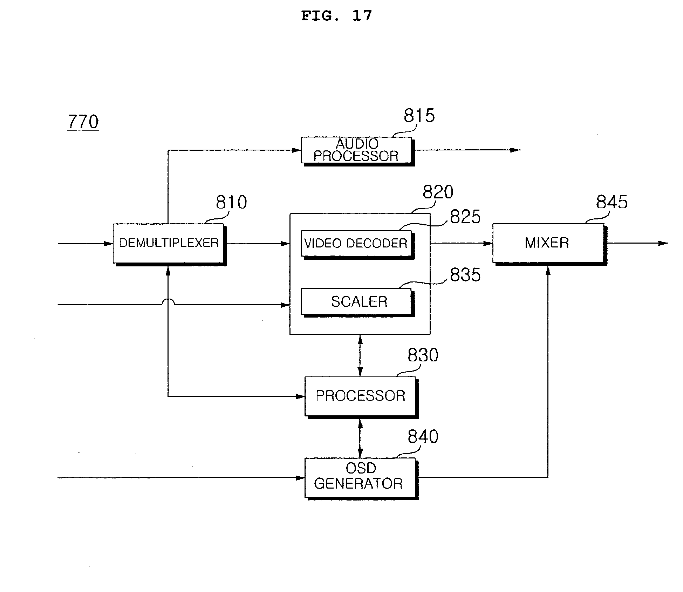

Although not shown in FIG. 16, the controller 770 may include a demultiplexer, a video processor, an audio processor, etc., as will be described later with reference to FIG. 17.

The audio output unit 785 receives the audio signal processed by the controller 770 and outputs the received audio signal as a sound. The audio output unit 785 may include a plurality of speakers. For example, the audio output unit 785 may include the front left and right speakers 785a and 785b of FIG. 15, stated previously. In addition, the audio output unit 785 may include left and right surround speakers (not shown), a center speaker (not shown), and a woofer (not shown).

A remote control device 800 transmits a user input to the user input interface unit 750. Also, the remote control device 800 may receive a video, audio or data signal output from the user input interface unit 750 and display the received signal on the remote control device 800 or output the received signal as a sound.

On the other hand, the block diagram of the image display apparatus 700 shown in FIG. 16 is for one embodiment of the present invention. The respective components of the block diagram may be combined, added or omitted according to specifications of the image display apparatus 700 which is actually implemented. In other words, as needed, two or more of these components may be combined into one component or one thereof may be subdivided into two or more components. Also, the function performed by each block is intended for description of the present embodiment, and the detailed operation or device thereof does not limit the scope of the present invention.

On the other hand, in a different manner from FIG. 16, the image display apparatus 700 may not include the tuner 710 and demodulator 720 shown in FIG. 16, and may receive a video content through the network interface unit 735 or the external device interface unit 730 and play back the received video content.

FIG. 17 is a block diagram of the controller in FIG. 16.

Referring to FIG. 17, the controller 770 according to the present embodiment may include a demultiplexer 810, an audio processor 815, a video processor 820, a processor 830, an on-screen display (OSD) generator 840, and a mixer 845. The controller 770 may further include a data processor (not shown), a frame rate converter (not shown), and a formatter (not shown).

The demultiplexer 810 demultiplexes an input stream. For example, when a moving picture experts group-2 (MPEG-2) transport stream (TS) is input, the demultiplexer 810 may demultiplex the input MPEG-2 TS to separate it into video, audio and data signals. Here, a stream signal input to the demultiplexer 810 may be a stream signal output from the tuner 710, demodulator 720 or external device interface unit 730.

On the other hand, the audio processor 815 may perform audio processing for the demultiplexed audio signal. To this end, the audio processor 815 may include a variety of audio decoders.

The audio processor 815 may also adjust bass, treble, volume, etc.

In particular, in connection with the present embodiment, when there is a directional gesture input, the audio processor 815 generates and outputs a sound corresponding to a given direction.

On the other hand, in the case where two speakers are provided in the image display apparatus 700, the audio processor 815 may sequentially change at least one of the frequency, amplitude and phase of each of audio signals of two channels corresponding respectively to the two speakers such that the audio signals of the two channels are output to provide a directional output.

For example, the audio processor 815 may increase at least one of the frequency, amplitude and phase of an audio signal of one of two channels or decrease at least one of the frequency, amplitude and phase of an audio signal of the other channel, based on a directional gesture input, to output a directional sound. As a result, the user may recognize directionality.

On the other hand, the video processor 820 may perform video processing for the demultiplexed video signal. To this end, the video processor 820 may include a video decoder 825 and a scaler 835.

The video decoder 825 decodes the demultiplexed video signal, and the scaler 835 scales the resolution of the decoded video signal such that the decoded video signal can be output through the display 780.

The video decoder 825 may include decoders of various standards, and decode an input video signal through one of a corresponding standard among the decoders.

The processor 830 may control the overall operation of the image display apparatus 700 or controller 770.

The OSD generator 840 generates an OSD signal in response to a user input or by itself.

The mixer 845 may mix the video signal processed by the video processor 820 with the OSD signal generated by the OSD generator 840.

The frame rate converter (FRC) (not shown) may convert the frame rate of an input video signal. Alternatively, the FRC (not shown) may output the input video signal directly without separate frame rate conversion.

The formatter (not shown) may convert the format of an input video signal or bypass the input video signal without separate format conversion. For example, the formatter (not shown) may convert a two-dimensional (2D) video signal into a three-dimensional (3D) video signal or vice versa. Alternatively, the formatter (not shown) may convert the format of the input video signal such that the input video signal is displayed on the display 780.

On the other hand, the block diagram of the controller 770 shown in FIG. 17 is for one embodiment of the present invention. The respective components of the block diagram may be combined, added or omitted according to specifications of the controller 770 which is actually implemented.

In particular, the frame rate converter (not shown) and the formatter (not shown) may not be provided in the controller 770, but be separately provided respectively or as one module.

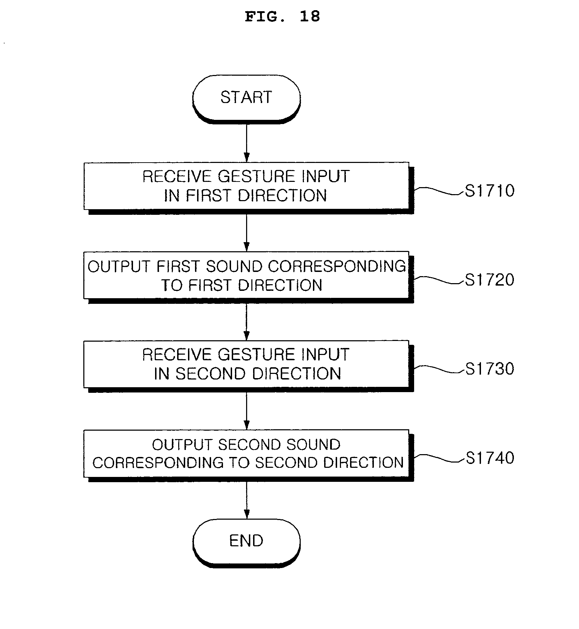

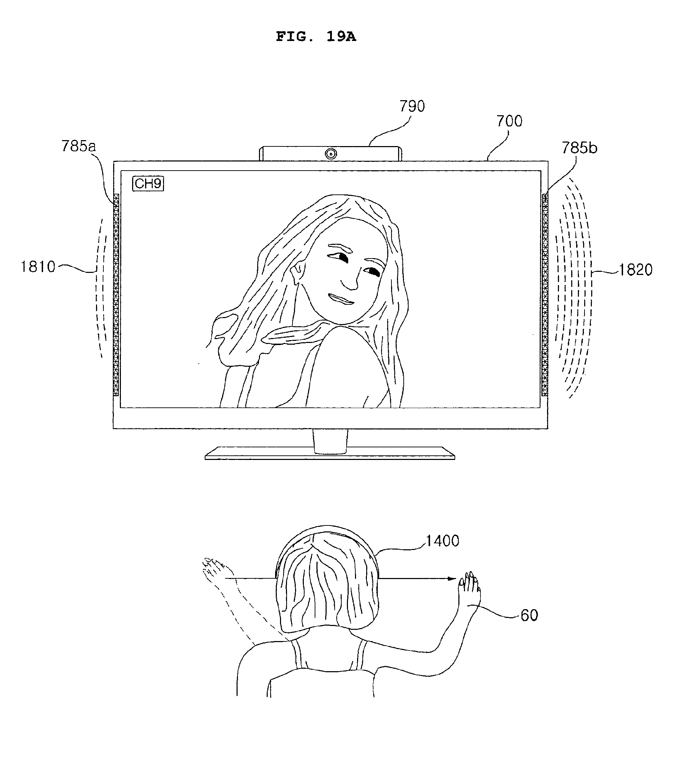

FIG. 18 is a flowchart illustrating a method for operating the image display apparatus according to the another embodiment of the present invention, and FIGS. 19A to 19D are views referred to for description of various examples of the operating method of FIG. 18.

First, referring to FIG. 18, the image display apparatus 700 according to the present embodiment receives a gesture input in a first direction (S1710). Then, the image display apparatus 700 outputs a first sound corresponding to the first direction (S1720).

FIG. 19A illustrates that a first sound 1810 is output through the first speaker 785a which is the left speaker and a second sound 1820 is output through the second speaker 785b which is the right speaker, based on a right-directional gesture input during viewing of a certain broadcast image.

The camera 790 captures an image of the user, which may then be input to the controller 770.

The controller 770 may recognize the user's face, the user's hand, etc., and a gesture corresponding to a motion of the user's hand.

In the case where the user 1400 performs the right-directional gesture input using her hand 60 as shown in FIG. 19A, the audio processor 815 in the controller 770 may generate and output the first and second sounds 1810 and 1820 corresponding to the right-directional gesture input.

As can be seen from FIG. 19A, the component of the second sound 1820 is more emphasized. For example, an audio signal of the second sound 1820 may be higher in frequency, greater in amplitude and/or earlier in phase than an audio signal of the first sound 1810.

To this end, a frequency-dependent phase/gain controller (not shown) of the audio processor 815 may control the phase/gain of each audio signal on a frequency band basis based on a received gesture input signal.

On the other hand, the overall sound volume may be increased based on the right-directional gesture input. That is, the component of the second sound 1820 may be more emphasized while the first and second sounds 1810 and 1820 are increased in volume.

On the other hand, the image display apparatus 700 receives a gesture input in a second direction (S1730). Then, the image display apparatus 700 outputs a second sound corresponding to the second direction (S1740).

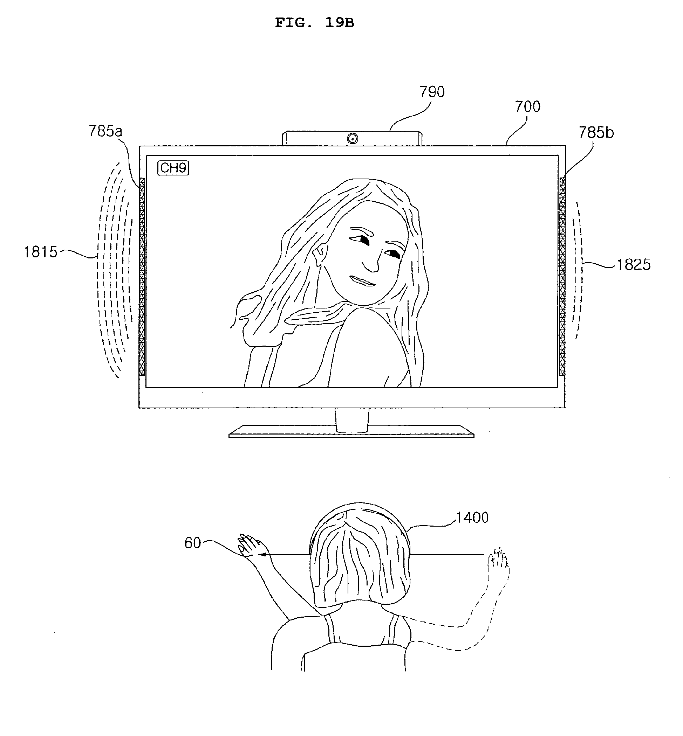

FIG. 19B illustrates that a first sound 1815 is output through the first speaker 785a which is the left speaker and a second sound 1825 is output through the second speaker 785b which is the right speaker, based on a left-directional gesture input during viewing of a certain broadcast image.

In the case where the user 1400 performs the left-directional gesture input using her hand 60 as shown in FIG. 19B, the audio processor 815 in the controller 770 may generate and output the first and second sounds 1815 and 1825 corresponding to the left-directional gesture input.

As can be seen from FIG. 19B, the component of the first sound 1815 is more emphasized. For example, an audio signal of the first sound 1815 may be higher in frequency, greater in amplitude and/or earlier in phase than an audio signal of the second sound 1825.

To this end, the frequency-dependent phase/gain controller of the audio processor 815 may control the phase/gain of each audio signal on a frequency band basis based on a received gesture input signal.

On the other hand, the overall sound volume may be decreased based on the left-directional gesture input. That is, the component of the first sound 1815 may be more emphasized while the first and second sounds 1815 and 1825 are decreased in volume.

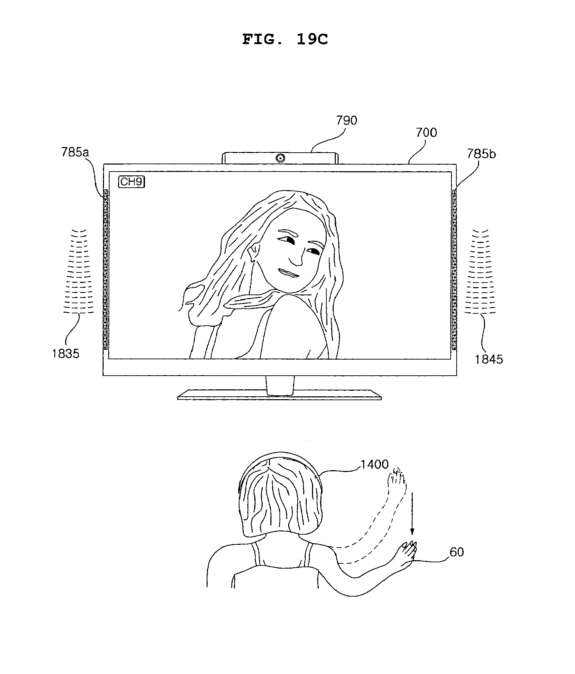

FIG. 19C illustrates that a first sound 1835 is output through the first speaker 785a which is the left speaker and a second sound 1845 is output through the second speaker 785b which is the right speaker, based on a downward gesture input during viewing of a certain broadcast image.

As can be seen from FIG. 19C, the downward components of both the first sound 1835 and second sound 1845 are emphasized. For example, audio signals of the first sound 1835 and second sound 1845 may be sequentially decreased in frequency and/or amplitude.

To this end, the frequency-dependent phase/gain controller of the audio processor 815 may control the phase/gain of each audio signal on a frequency band basis based on a received gesture input signal.

On the other hand, the broadcast channel being viewed may be decreased in number based on the downward gesture input. That is, the broadcast channel being viewed may be changed from CH 9 to CH 8 and a corresponding broadcast image may be displayed on the image display apparatus 700.

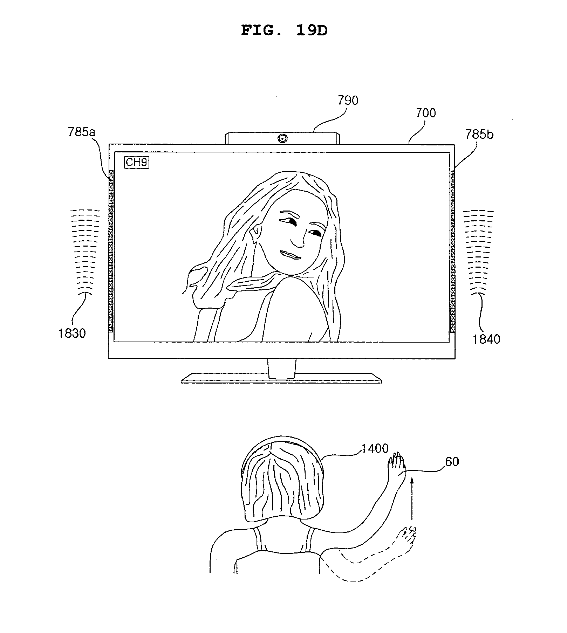

FIG. 19D illustrates that a first sound 1830 is output through the first speaker 785a which is the left speaker and a second sound 1840 is output through the second speaker 785b which is the right speaker, based on an upward gesture input during viewing of a certain broadcast image.

As can be seen from FIG. 19D, the upward components of both the first sound 1830 and second sound 1840 are emphasized. For example, audio signals of the first sound 1830 and second sound 1840 may be sequentially increased in frequency and/or amplitude.

On the other hand, the broadcast channel being viewed may be increased in number based on the upward gesture input. That is, the broadcast channel being viewed may be changed from CH 9 to CH 10 and a corresponding broadcast image may be displayed on the image display apparatus 700.

On the other hand, when there is a right-directional gesture input under the condition that a file list screen or Web page screen is displayed on the image display apparatus 700, the audio signal 630 as shown in FIG. 6(b) may be output while a screen change is made due to screen scrolling.

On the other hand, even if there are gesture inputs in the same direction, output audio signals may differ according to attributes of screens displayed or attributes of screens to be displayed upon screen change. In detail, the output audio signals may differ in at least one of frequency, amplitude and phase. As a result, the user may readily recognize screen attributes.

That is, different audio signals may be output when there is a right-directional gesture input under the condition that a broadcast image is displayed and when there is a right-directional gesture input under the condition that a file list screen is displayed.

On the other hand, when there is a right-directional gesture input under the condition that a first file list screen or first Web page screen is displayed and when there is a right-directional gesture input under the condition that a last file list screen or last Web page screen is displayed, output audio signals may differ in at least one of frequency, amplitude and phase. As a result, the user may intuitively recognize whether the current screen is the first screen or the last screen.

The image display apparatus and the method for operating the same according to the present invention are not limited to the configurations and methods of the above-described embodiments, and all or some of these embodiments may be selectively combined and configured so that those embodiments may be subjected to various modifications.

On the other hand, the image display apparatus operating method of the present invention may be implemented in a recording medium readable by the processor of the image display apparatus by processor-readable codes. The processor-readable recording medium may include all types of recording units in which processor-readable data may be stored. For example, the processor-readable recording medium may include a ROM, a RAM, a CD-ROM, a magnetic tape, a floppy disk, an optical data storage, or the like. The processor-readable recording medium may also be implemented in the form of a carrier wave such as transmission over the Internet. Also, the processor-readable recording medium may be distributed to networked computer systems and processor-readable codes may be stored and executed in the computer systems in a distributed manner.

As is apparent from the above description, according to an embodiment of the present invention, a corresponding sound may be output based on a directional touch input. Therefore, the user may intuitively recognize directionality based on the touch input, resulting in an increase in user convenience.

For example, sounds corresponding to a touch input in a first direction and a touch input in a second direction may be different in at least one of frequency, amplitude and phase. Therefore, the user may intuitively recognize directionality through the sounds.

On the other hand, at least one of the amplitude and frequency of a corresponding sound may be changed according to the strength or speed of a touch input, resulting in an increase in user convenience.

On the other hand, based on the touch input in the first direction, a directional sound may be output while a screen change is made, resulting in an increase in user convenience.

On the other hand, a directional sound may be output by controlling the gain/phase of the sound on a frequency band basis, resulting in an increase in user convenience.

On the other hand, when there is the touch input in the first direction under the condition that a lock screen is displayed, a sound corresponding to the first direction may be output while a home screen is displayed due to unlocking. Therefore, the user may intuitively recognize a touch direction, resulting in an increase in user convenience.

On the other hand, in an image display apparatus through which a gesture input can be performed, a corresponding sound may be output based on a directional gesture input. Therefore, the user may intuitively recognize directionality based on the gesture input, resulting in an increase in user convenience.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for operating an image display apparatus, the method comprising:
receiving (S510) a touch input in a first direction;
outputting (S520) a first sound corresponding to the first direction;
receiving (S530) a touch input in a second direction; and
outputting (S540) a second sound corresponding to the second direction.

2. The method according to claim 1, wherein the first sound is different in at least one of frequency, amplitude and phase from the second sound.

3. The method according to claim 1, wherein the first sound is changed in at least one of output time, amplitude and frequency according to a strength or speed of the touch input in the first direction.

4. The method according to claim 1, further comprising:
displaying a first screen; and
displaying a second screen based on the touch input in the first direction.

5. The method according to claim 1, further comprising:
displaying a first screen; and
displaying a second screen based on the touch input in the first direction,
wherein the first sound corresponding to the first direction is changed in at least one of frequency, amplitude and phase according to an attribute of the first screen.

6. The method according to claim 1, further comprising:
displaying a lock screen; and
displaying a home screen based on the touch input in the first direction.

7. The method according to claim 1, further comprising:
receiving a touch input in a third direction;
outputting a third sound corresponding to the third direction;
receiving a touch input in a fourth direction; and
outputting a fourth sound corresponding to the fourth direction.

8. The method according to claim 1, wherein the outputting of the first sound and the outputting of the second sound each comprise controlling at least one of a gain and a phase of an output audio signal on a frequency band basis to output a corresponding one of the first sound and the second sound.

9. The method according to claim 1, wherein the outputting of the first sound and the outputting of the second sound each comprise:
controlling sound image localization based on an input audio signal;
equalizing the sound image localization-controlled audio signal;
performing sub-band analysis filtering with respect to the equalized audio signal;
controlling at least one of a phase and a gain of the audio signal subjected to the sub-band analysis filtering on a sub-band basis; and
performing sub-band synthesis filtering with respect to the phase-controlled or gain-controlled audio signal.

10. An image display apparatus comprising:
a display (151);
a touch sensor (210) configured to sense a touch input;
an audio processing unit (220) configured to generate a first sound in response to a touch input in a first direction sensed by the touch sensor and to generate a second sound in response to a touch input in a second direction sensed by the touch sensor; and
an audio output unit (153) configured to output the first sound or the second sound.

11. The image display apparatus according to claim 10, wherein the audio processing unit (220) sets the first sound and the second sound such that the first sound and the second sound are different in at least one of frequency, amplitude and phase.

12. The image display apparatus according to claim 10, wherein the audio processing unit (220) changes at least one of an output time, an amplitude and a frequency of the first sound according to a strength or speed of the touch input in the first direction.

13. The image display apparatus according to claim 10, wherein the display (151) displays a first screen, and then displays a second screen based on the touch input in the first direction,
wherein the audio processing unit (220) changes at least one of a frequency, an amplitude and a phase of the first sound corresponding to the first direction according to an attribute of the first screen.

14. The image display apparatus according to claim 10, wherein the audio processing unit (220) comprises:
a sound image localization unit (335) configured to control sound image localization based on an input audio signal;
an equalization unit (340) configured to equalize the sound image localization-controlled audio signal;
a sub-band analysis unit (345) configured to perform sub-band analysis filtering with respect to the equalized audio signal;
a frequency-dependent phase/gain controller (350) configured to control at least one of a phase and a gain of the audio signal subjected to the sub-band analysis filtering on a sub-band basis; and
a sub-band synthesis unit (355) configured to perform sub-band synthesis filtering with respect to the phase-controlled or gain-controlled audio signal.

15. The image display apparatus according to claim 10, further comprising:
a camera (121); and
a controller (180)configured sense a user's gesture based on an image captured by the camera, and
wherein the audio output unit (153) outputs the first sound in response to a gesture input in the first direction sensed by the controller and outputs the second sound in response to a gesture input in the second direction sensed by the controller.
